# EUROPEAN PATENT APPLICATION

(11) **EP 4 075 607 A1**
(43) Date of publication of application: **19.10.2022**
(21) Application number: 22167936.8
(22) Date of filing: 12.04.2022
(51) Int. Cl.: H01R 11/12, H01R 13/02, H01R 13/03, H01R 43/28, H02G 15/00

(54) **ELECTRICAL CONDUCTOR ASSEMBLY, METHOD FOR PRODUCING AN ELECTRICAL CONDUCTOR ASSEMBLY**

(30) Priority: 14.04.2021 DE 102021109369
(71) Applicant: TE Connectivity Germany GmbH, 64625 Bensheim (DE)
(72) Inventor: VEIHL, Maximilian, 64625 Bensheim (DE); BUECHLING, Chris, 64625 Bensheim (DE); EHEIM, Manuel, 64625 Bensheim (DE); KAEHNY, Frank, 64625 Bensheim (DE); WOLF, Marcus, 64625 Bensheim (DE); ULRICH, Harald, 64625 Bensheim (DE); SCHEER, Kevin, 64625 Bensheim (DE); LUECK, Florian, 64625 Bensheim (DE); KOSMALSKI, Christoph, 64625 Bensheim (DE); MAURUS, Rolf, 64625 Bensheim (DE)
(74) Representative: Grünecker Patent- und Rechtsanwälte PartG mbB

(57) **Abstract**

An electrical conductor assembly (100) is shown comprising a line section (20) with a plurality of conductor wires (21) made of a first electrically conductive material, and a contact section (30) in which the conductor wires (21) are compacted to form a contact unit (31), wherein the electrical conductor assembly (100) comprises a layer (40) made of a second electrically conductive material on a contact surface (32) of the contact unit (31). Furthermore, the document discloses a method comprising a compacting step in which a plurality of conductor wires (21) made of a first conductive material is compacted in sections to form a contact unit (31), wherein the method comprises a step in which a layer (40) made of a second conductive material is attached to a contact surface (32) of the contact unit (31).

## Description

The invention relates to an electrical conductor assembly as well as to a method for producing an electrical conductor assembly.

For example, an electrical conductor assembly is known comprising a line section with a plurality of conductor wires made of a first electrically conductive material and a contact section in which the conductor wires are compacted to form a contact unit. The contact unit can allow for simple connection to other elements. The compaction can be done, for example, by ultrasonic welding.

The drawback of such conductor assemblies is that contacting the contact unit is often only associated with a high contact resistance.

The object of the invention is to provide a solution that allows contacting with a low contact resistance.

According to the invention, this is achieved when the electrical conductor assembly has a layer made of a second electrically conductive material on a contact surface of the contact unit.

For the method, this is achieved in that the method comprises a step in which a layer of a second electrically conductive material is attached to a contact surface of the contact unit or is applied to the contact surface.

Such a layer can reduce contact resistance.

The invention can be further improved by the following developments and configurations which are advantageous each by itself and can be combined with one another at random. These further developments and configurations can also be independent of the solution with the layer and represent their own inventions.

In order to obtain a high degree of flexibility, the conductor wires can be separate in the line section. In particular, they can be not connected in a positive substance-fit manner to one another there. The conductor in the line section can be not compacted.

Compacting is to be understood in particular to mean the creation of a connection in a positive substance-fit manner between the individual conductor wires. Empty spaces between the conductor wires are reduced or almost at zero. This can be done, for example, by ultrasonic welding or melting. The conductor wires can be made to assume a desired shape by mechanical pressure. A compacted contact unit can consist substantially of electrically conductive material and have few or no cavities.

The layer can be connected integrally to the contact unit or to the remainder of the contact unit in order to enable particularly reliable contacting. The layer can be, for example, connected in a positive substance-fit manner to the remainder of the contact unit.

The layer can be welded to the contact unit or to the remainder of the contact unit in order to obtain a particularly close connection.

The layer can be attached to the contact unit or to the remainder of the contact unit by compacting. In particular, the layer can be attached to the remainder of the contact unit during a compacting step in which the contact unit is produced. This can reduce the number of steps in manufacturing.

In an advantageous configuration, the contact unit can comprise a through hole. Such a through hole can facilitate the attachment to a mating element. For this purpose, an attachment element, such as a screw, can be inserted through the through hole. The attachment element can thereafter exert a force along the direction of the through hole. For example, a head of a screw can exert a force upon the contact unit and press it against the mating contact element.

The conductor wires in the line section can run along a longitudinal direction and the through hole can extend perpendicular to the longitudinal direction. Due to the vertical arrangement, the attachment can be particularly secure since attachment forces do not deform the conductor wires along the longitudinal direction.

In a further advantageous configuration, the through hole can penetrate the contact surface. The forces exerted by an attachment element can thereby act directly upon the contact surface. The electrical contact can thereby be improved particularly effectively.

The conductor wires in the line section can be braided together. Either individual conductor wires can be braided or individual conductor wires can be grouped into bundles which are then braided together. The braiding can lead to a configuration that, firstly, creates a certain stability, but secondly, also allows for a desired flexibility.

In an alternative configuration, the conductor wires can run parallel to one another in the line section. This can increase flexibility.

Other configurations of the conductor wires in the line section are also possible. For example, the conductor wires can run in a disorderly manner or they can be twisted together.

The contact unit can be configured to be plate-shaped. This can enable reliable contacting while at the same time having a compact configuration. Plate-shaped can mean in particular that the contact unit is roughly cuboid, wherein the extension in one direction is significantly smaller than in two directions extending perpendicular thereto, for example, by a factor of 3.

In one embodiment that can be mechanically particularly stable, the conductor wires can run around the through hole in a continuous manner. In particular, all of the conductor wires can run around the through hole. As a result, none of the conductor wires are cut by the through hole. Such a through hole can be obtained by keeping a through hole free during compacting by way of a corresponding element, for example, a punch. Before compacting, the element can be inserted between the conductor wires so that they are displaced laterally.

In an alternative configuration, the through hole can be created after the compacting step, for example, by drilling or by another method in which material is removed.

The layer can be part of a stabilization sleeve which encloses the contact unit at least in part. Such a layer can then fulfill a dual function in that it facilitates contacting and contributes to the stabilization of the contact unit. The stabilization sleeve can be connected at least in part in a positive substance-fit manner to the contact unit. In other configurations, the stabilization sleeve is separate and can be detached from the contact unit.

The stabilization sleeve can enclose or engage around the contact unit at least on two oppositely disposed sides. This can prevent the contact unit from expanding on the oppositely disposed sides, for example, in the event of a mechanical load, as can occur when compacting, attaching, or contacting.

According to an advantageous configuration, the electrical conductor assembly can comprise a guide member for an attachment element. The guide member can define the desired direction for the attachment element. Furthermore, the guide member can have smooth walls that allow for easy guidance of the attachment element. In contrast thereto, it can be more difficult to insert the attachment element into the through hole without a guide member for the reason that the side walls of the through hole can have a rough structure due to the compacted conductor wires. Furthermore, a gap between the attachment element and the contact unit can be bridged by the guide member so that a flow of force between the two is possible.

The guide member can be a sleeve or comprise a sleeve. In particular, the sleeve can be configured to be cylindrical, in particular circular-cylindrical.

The guide member can be arranged in the through hole.

In order to keep the structure simple, the guide member can be formed integrally with the stabilization sleeve.

In a further advantageous configuration, the guide member can be formed integrally with the layer. The structure is simple there as well.

In order to increase safety, the conductor assembly can comprise a touch guard made of electrically insulating material which encloses the contact section at least in part.

In the line section, a cable sheath can be arranged around the plurality of conductor wires in order to prevent touching. The cable sheath and the touch guard can work together and enable protection against touching continuously. The contact surface in a non-assembled state can there remain open. In an assembled state, the contact surface can abut against a corresponding mating contact surface and the conductor assembly can have a touch guard on all sides which in particular is closed on all sides.

According to an advantageous configuration, the touch guard can enclose the stabilization sleeve at least in part. The touch guard can abut against the stabilization sleeve and/or support the stabilization sleeve. As a result, the conductor assembly can be further stabilized. In particular, the touch guard can be part of a stabilization assembly comprising the stabilization sleeve.

The invention further comprises an electrical contact assembly comprising an electrical conductor assembly according to the invention and a mating contact element, wherein the layer of the electrical conductor assembly abuts against a mating contact surface of the mating contact element.

In the connected state, the layer can be disposed between the remainder of the contact unit or the contact unit and the mating contact element, respectively.

The electrical contact assembly can advantageously be attached to the mating contact element by a repeatedly detachable attachment element. The attachment element can be a screw. Furthermore, the attachment element can be provided with a touch guard element, for example, a touch guard cap.

In an advantageous configuration of the method, a separate element can be arranged next to the plurality of conductor wires prior to the compacting step and the separate element can be attached at least in sections as the layer during the compacting step. The separate element can be a film, a plate, sheet metal, or an element formed from a film, a plate, or sheet metal.

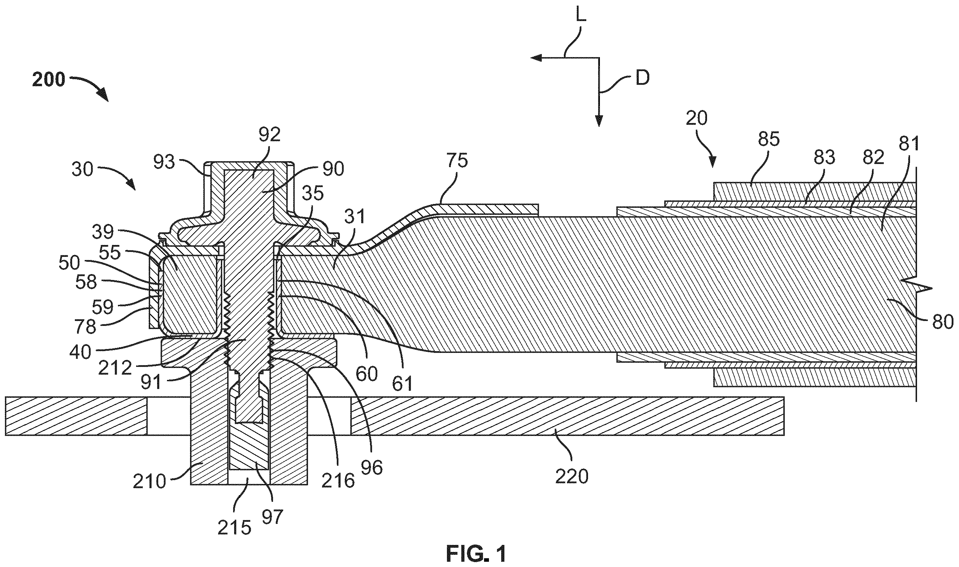

The invention shall be explained in more detail hereafter by way of example on the basis of advantageous configurations with reference to the drawings. The advantageous further developments and configurations shown there are each independent of one another and can be combined with one another at random, depending on how this is necessary for the application, where
- Fig. 1: shows a schematic lateral sectional view of an embodiment of a contact assembly with a conductor assembly;

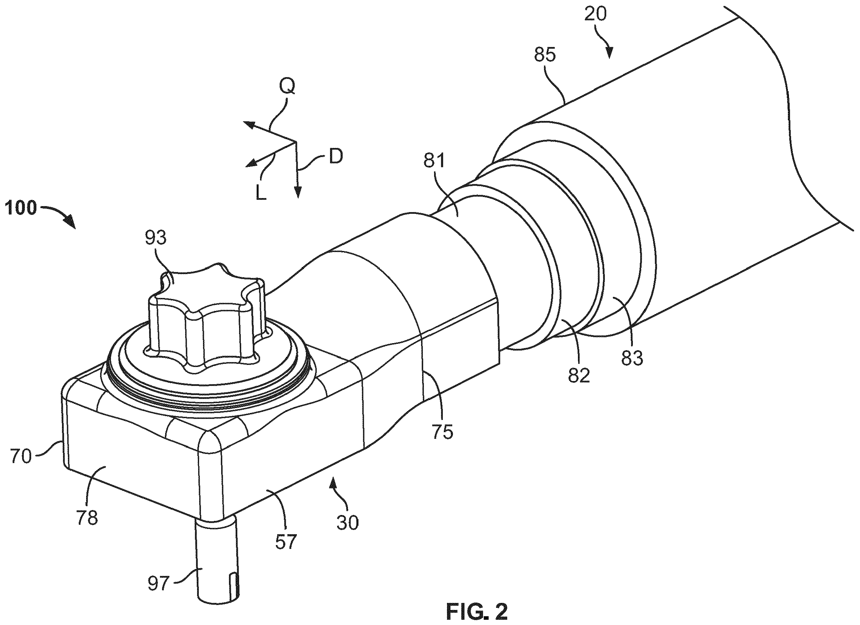

- Fig. 2: shows a schematic perspective view of the conductor assembly from Figure 1;

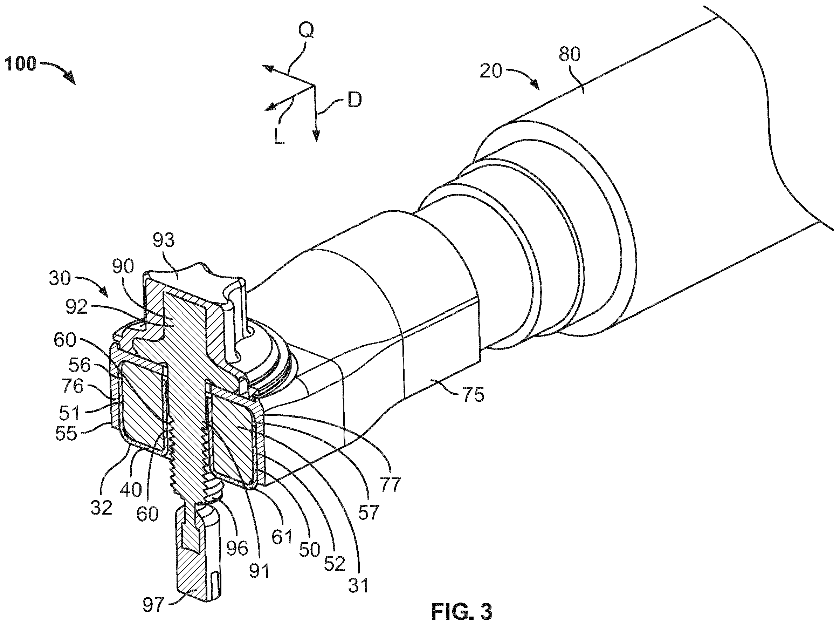

- Fig. 3: shows a schematic partially sectioned perspective view of the conductor assembly from Figures 1 and 2;

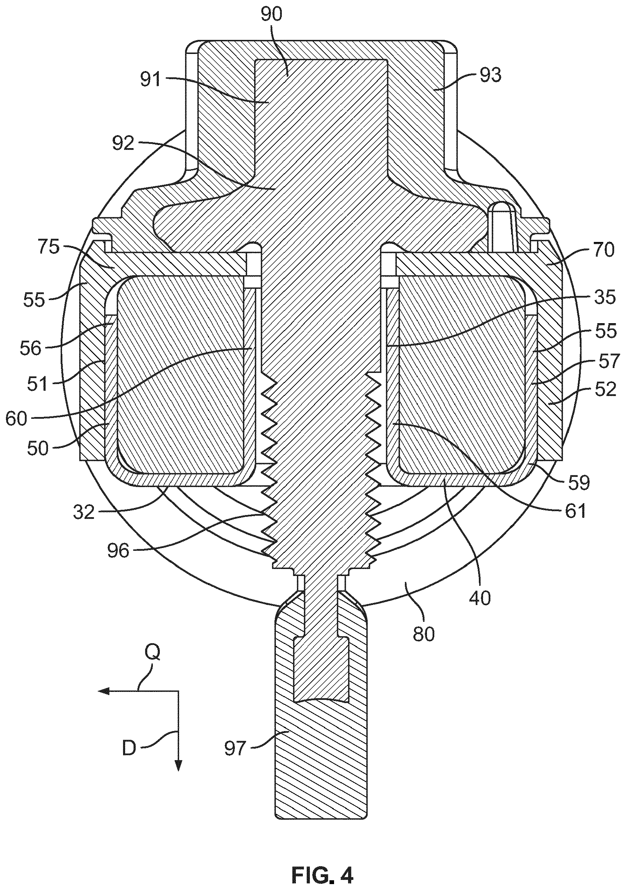

- Fig. 4: shows a schematic sectional view of the conductor assembly from Figures 1 to 3;

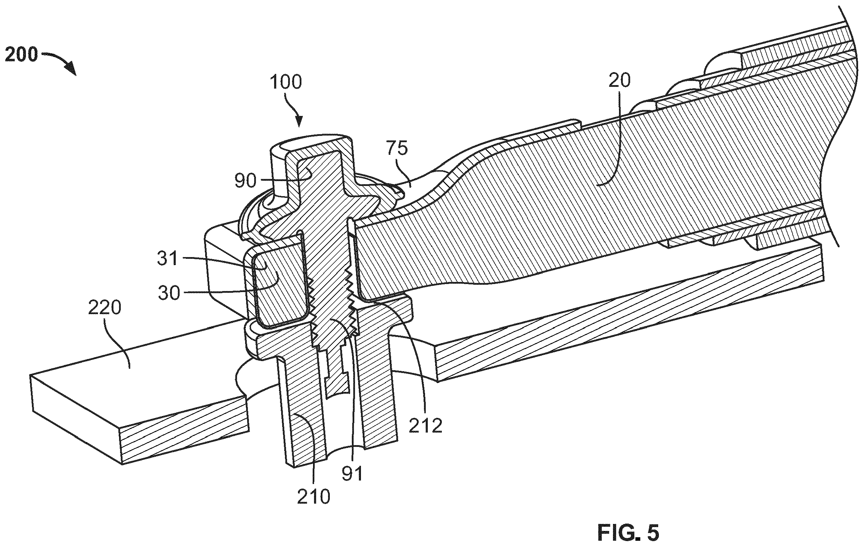

- Fig. 5: shows a schematic partially sectioned perspective view of the conductor assembly from Figures 1 to 4;
- Fig. 6: shows a schematic perspective view of a further embodiment of a conductor assembly;
- Figs. 7A to 7D: show schematic perspective views of further embodiments of conductor assemblies; and
- Fig. 8: shows a schematic perspective view of a further embodiment of a contact assembly.

Various configurations of an electrical conductor assembly 100 are shown in the figures. Electrical conductor assembly 100 comprises a respective line section 20 in which a plurality of conductor wires 21 made of a first electrically conductive material are present. Electrical conductor wires 21 can be, for example, combined to form different bundles 23 and bundles 23 can be braided together. This enables good stability having flexibility at the same time. For example, they can be braided together in a flat or tubular manner. In other configurations, electrical conductor wires 21 can also run parallel to one another or be braided together individually. Copper, for example, or a material that contains copper, can be used as the first electrically conductive material.

In a contact section 30 of electrical conductor assembly 100, conductor wires 21 are compacted to form a contact unit 31. Electrical conductor wires 21 therefore form a compact member there, for example, in the form of a plate 39. Such a contact unit 31 can easily be connected to further elements, for example, to a mating contact element 210. For this purpose, a contact surface 32, for example, a mating contact surface 212, can be made to contact mating contact element 210. The compacting can be effected in various ways, for example, by pressing and welding, in particular cold welding such as ultrasonic welding, or by melting. Conductor wires 21 can be made to assume a desired shape by simultaneous mechanical pressure.

A layer 40 made of a second electrically conductive material is provided on contact surface 32 in order to keep contact resistance as low as possible when contacting a mating contact element 210. Layer 40 can be formed integrally with the remainder of contact unit 31 and can be arranged, for example, as a separate element next to the plurality of conductor wires 21 prior to the compacting step and be attached as layer 40 during the compacting step. In the attached state, layer 40 can form contact surface 32. In other configurations, layer 40 is separate from contact unit 31.

Materials that can be used for layer 40 are, in particular, those which reduce contact resistance or prevent oxidation. They can be in particular tin, zinc, silver, gold or mixtures of these materials. Layer 40 can also contain copper.

Conductor assembly 100 can be part of a cable 80. An inner conductor 81 of cable 80 can form line section 20 in part. Cable 80 can furthermore comprise an insulation layer 82 over inner conductor 81, an outer conductor 83 arranged thereover, and an outer cable sheath 85. Outer conductor 83 can serve as grounding or shielding.

Contact unit 31 has a through hole 35 which extends along a direction of passage D through contact unit 31 and in particular through contact surface 32. Direction of passage D is there perpendicular to a longitudinal direction L along which conductor wires 21 run in line section 20. Furthermore, both direction of passage D as well as longitudinal direction L are perpendicular to a transverse direction Q. Conductor wires 21 are therefore not discontinued by through hole 35 but run around it. This can be achieved during production by inserting a respective tool between conductor wires 21 before or during the compacting step, which tool is removed again after compacting. Such a tool can have, for example, a tapering tip in order to facilitate the insertion through the plurality of electrical conductor wires 21.

In the section in which the tool is disposed between electrical conductor wires 21 in the compacting step, it can have a cylindrical, for example, a circular-cylindrical, cross section. As a result, a cylindrical through hole 35 can be produced, which enables the attachment in various rotational positions. In order to also be able to attach electrical conductor assembly 100 in certain defined orientations, through hole 35 and the corresponding tool can have a different cross section, for example, a rectangular, square, or triangular cross section.

Electrical conductor assembly 100 can comprise a stabilization sleeve 50 which stabilizes contact unit 31. Stabilization sleeve 50 can enclose contact unit 31 at least in part and thereby form a counter-bearing that reduces or prevents outward deformation, for example, during compacting, during the attachment, or when contacting. Stabilization sleeve 50 in particular can enclose or engage around contact unit 31 at least on two oppositely disposed sides 51, 52.

In the examples shown, two sides 51, 52 are arranged with respect to transverse direction Q at different ends of contact unit 31. Measured in the direction of passage D, stabilization sleeve 50 extends along almost the entire height of contact unit 31. Stabilization sleeve 50 can also enclose contact unit 31 at other sides, for example, at a front side. A front wall 58 can have an additional reinforcing effect if it connects side walls 56, 57 to one another arranged on sides 51 and 52.

Stabilization sleeve 50 can form a receptacle for contact section 31 and can be configured, for example, in the shape of a channel, trough, or trench.

Layer 40 is advantageously a part of stabilization sleeve 50. It forms a base which is arranged at contact surface 32 or forms it.

Stabilization sleeve 50 can be made from sheet metal 59, for example, by punching and bending. Such a component can be attached to electrical conductor wires 21 even before the compacting step and can also be used for stabilization already during the compacting.

Electrical conductor assembly 100 can furthermore comprise a guide member 60 which is used to guide an attachment element 90. Guide member 60 can provide a smooth surface for attachment element 90 in order to enable easy insertion. In the examples shown, guide member 60 is configured as a sleeve 61. Sleeve 61 is arranged in through hole 35. Furthermore, sleeve 61 is formed integrally with layer 40 and with stabilization sleeve 50. In this example, sleeve 61 is configured to be cylindrical, wherein the cylinder axis runs parallel to direction of passage D.

Sleeve 61 together with stabilization sleeve 50 can also provide further stabilization for contact section 30. Contact unit 31 can be in particular held and stabilized between sleeve 61, a front wall 58, and side walls 56, 57.

In order to prevent a user from inadvertently touching electrically conductive parts, conductor assembly 100 can comprise a touch guard 70 which encloses contact section 30 at least in part. It is made of an electrically insulating material, for example, plastic material. In line section 20, electrical insulation is provided by cable sheath 85 which typically extends as far as touch guard 70, to which it then connects without any gaps. This prevents a user from touching.

Touch guard 70 can be part of a touch guard assembly 75 which, in addition to touch guard 70, also comprises touch guard caps 93, 97 on a screw 91 which serves as an attachment element 90. Touch guard caps 93, 97 are attached to a screw head 92 or to one end of screw 91 and enclose screws 91 there.

When electrical conductor assembly 100 is connected to a corresponding mating contact element 210, touch guard arrangement 75 then forms all-round protection against unwanted touching by a user. In a non-connected state, only contact surface 32 is exposed and enables electrical contact with mating contact element 210.

Screw 91 is detachable repeatedly. An external thread 96 of screw 91 interacts with an internal thread 216 arranged in a through hole 215 of mating contact element 210.

Mating contact element 210 can be connected in an electrically conductive manner to a busbar 220 or it can be part of a busbar 220.

Touch guard 70 encloses part of stabilization sleeve 50 and thereby forms part of a stabilization assembly 55 which further stabilizes contact unit 31. Side walls 76, 77 of touch guard 70 there abut against side walls 56, 57 of stabilization sleeve 50 and support them towards the outside. Unlike stabilization sleeve 50, side walls 56, 57 of which are connected at an underside, side walls 76, 77 of touch guard 70 are connected at an upper side. Stabilization assembly 55, which comprises touch guard 70 and stabilization sleeve 50, consequently encloses contact unit 31 on all sides, in particular along a circumference, and thereby achieves a high level of stability.

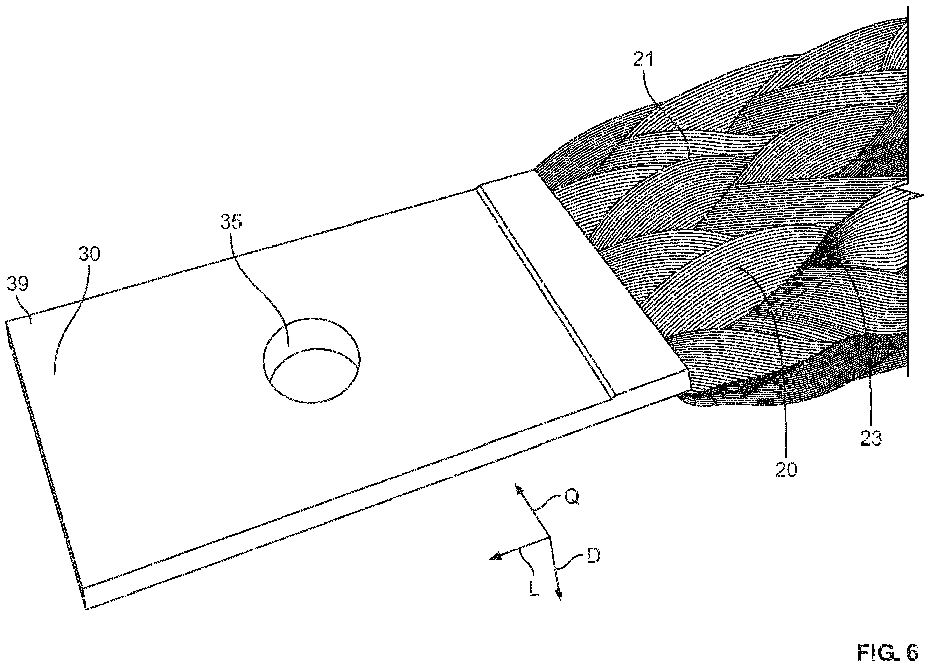

Figure 6 shows a contact unit 31 after compacting. Contact unit 31 forms a cuboid plate 39, the dimensions of which in direction of passage D are significantly smaller than in longitudinal direction L and in transverse direction Q, in the example shown by at least a factor of 10. Other shapes and factors are of course also possible.

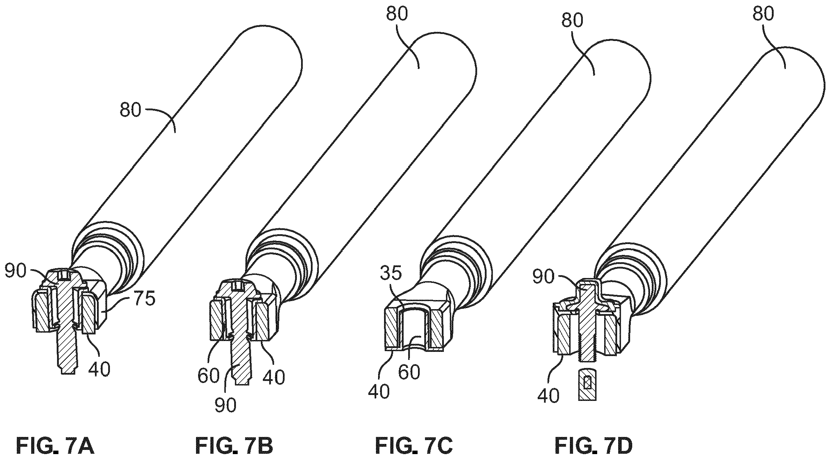

In Figures 7A to 7D, various configurations are shown in which certain elements are present or not present. For example, in the embodiment according to Figure 7A, there is a touch guard 70 present which is not present in the other configurations.

The configurations according to Figures 7A to 7C each comprise a guide member 60 in the form of a sleeve 61 in through hole 32, whereas it is not present in the configuration according to Figure 7D.

In the configuration according to Figure 7C, there is no attachment element 90 present, whereas in the embodiments according to Figures 7A, 7B and 7D it is present in the form of a screw. Such an attachment element 90 can also be present on a mating contact element 210, or attachment can be effected in a different manner.

Configurations without a layer 40 are also possible. Other aspects, such as, for example, stabilization sleeve 50, touch guard 70, or guide member 60 can represent independent inventions.

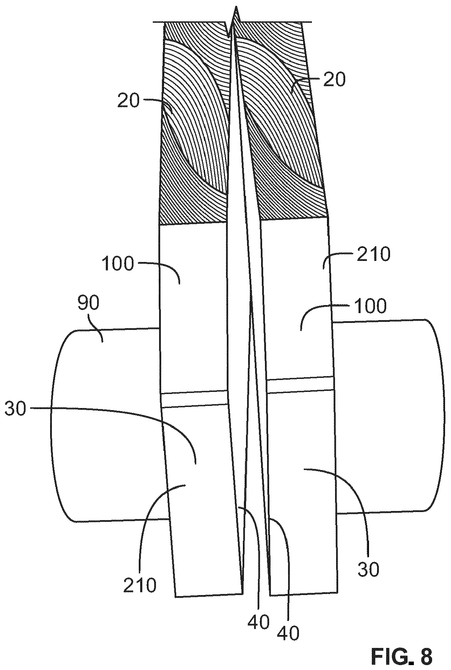

Figure 8 shows a configuration in which two conductor assemblies 100 form a contact assembly 200. Each of conductor assemblies 100 can be viewed as a mating contact element 210 for other conductor assembly 100. At least one of conductor assemblies 100 comprises a layer 40 which reduces contact resistance. Two conductor assemblies 100 can be attached to one another by way of an attachment element 90, for example, in the form of a screw 91 with a nut 94.

### Reference characters

- 20: line section
- 21: conductor wire
- 23: bundle
- 30: contact section
- 31: contact unit
- 32: contact surface
- 35: through hole
- 39: plate
- 40: layer
- 50: stabilization sleeve
- 51: first side
- 52: second side
- 55: stabilization assembly
- 56: side wall
- 57: side wall
- 58: front wall
- 59: sheet metal
- 60: guide member
- 61: sleeve
- 70: touch guard
- 75: touch guard assembly
- 80: cable
- 81: inner conductor
- 82: insulation layer
- 83: outer conductor
- 85: cable sheath
- 90: attachment element
- 91: screw
- 92: screw head
- 93: touch guard cap
- 94: nut
- 96: external thread
- 97: touch guard cap
- 100: conductor assembly
- 200: contact assembly
- 210: mating contact element
- 212: mating contact surface
- 215: through hole
- 216: internal thread
- 220: power rail

- D: direction of passage
- L: longitudinal direction
- Q: transverse direction

## Claims

1. Electrical conductor assembly (100) comprising a line section (20) with a plurality of conductor wires (21) made of a first electrically conductive material, and a contact section (30) in which said conductor wires (21) are compacted to form a contact unit (31), wherein said electrical conductor assembly (100) comprises a layer (40) made of a second electrically conductive material on a contact surface (32) of said contact unit (31).

2. Electrical conductor assembly (100) according to claim 1, wherein said layer (40) is connected integrally to the remainder of said contact unit (31).

3. Electrical conductor assembly (100) according to claim 1 or 2, wherein said contact unit (31) comprises a through hole (35).

4. Electrical conductor assembly (100) according to claim 3, wherein said conductor wires (21) run around said through hole (35) in a continuous manner.

5. Electrical conductor assembly (100) according to one of the claims 1 to 4, wherein said layer (40) is part of a stabilization sleeve (50) which encloses said contact unit (31) at least in part.

6. Electrical conductor assembly (100) according to one of the claims 1 to 5, wherein said electrical conductor assembly (100) comprises a guide member (60) for an attachment element (90).

7. Electrical conductor assembly (100) according to claim 6, wherein said guide member (60) is formed integrally with said stabilization sleeve (50).

8. Electrical conductor assembly (100) according to one of the claims 3 and 6 or 7, wherein said guide member (60) is arranged in said through hole (35).

9. Electrical conductor assembly (100) according to one of the claims 1 to 8, wherein said conductor assembly (100) comprises a touch guard (70) made of electrically insulating material which encloses said contact section (30) at least in part.

10. Electrical conductor assembly (100) according to one of the claims 5 to 8 and 9, wherein said touch guard (70) encloses said stabilization sleeve (50) at least in part.

11. Electrical contact assembly (200), comprising an electrical conductor assembly (100) according to one of the claims 1 to 10 and a mating contact element (210), wherein said layer (40) of said electrical conductor assembly (100) abuts against a mating contact surface (212) of said mating contact element (210).

12. Electrical contact assembly (200) according to claim 11, wherein said electrical conductor assembly (100) is attached to said mating contact element (210) by a repeatedly detachable attachment element (90).

13. Method comprising a compacting step in which a plurality of conductor wires (21) made of a first conductive material is compacted in sections to form a contact unit (31), wherein said method comprises a step in which a layer (40) made of a second conductive material is attached to a contact surface (32) of said contact unit (31) or applied to said contact surface (32).

14. Method according to claim 13, wherein a separate element is arranged next to the plurality of conductor wires (21) prior to said compacting step and said separate element is attached at least in sections as said layer (40) during said compacting step.

15. Method according to one of the claims 13 or 14, wherein a through hole (35) between said conductor wires (21) is kept free in said compacting step.
